# FASCICULE DE BREVET EUROPEEN

(11) **EP 2 681 251 B1**
(45) Date de publication et mention de la délivrance du brevet: **12.11.2014**
(21) Numéro de dépôt: 11771239.8
(22) Date de dépôt: 21.09.2011
(51) Int. Cl.: C08F 255/02, C08F 8/42, C08J 3/24, C08J 3/12, C08F 255/04, C08F 255/06

(54) **POLYOLEFINES MODIFIEES, RETICULABLES APRES TRANSFORMATION, ET PROCEDE DE FABRICATION DESDITES POLYOLEFINES**
NACH DER TRANSFORMATION VERNETZBARE MODIFIZIERTE POLYOLEFINE UND VERFAHREN ZUR HERSTELLUNG DIESER POLYOLEFINE
MODIFIED POLYOLEFINS CROSSLINKABLE AFTER TRANSFORMATION, AND PROCESS FOR PRODUCING SAID POLYOLEFINS

(30) Priorité: 04.03.2011 FR 1151798
(43) Date de publication de la demande: 08.01.2014
(73) Titulaire: Setup Performance, 38290 Frontonas (FR)
(72) Inventeur: GIMENEZ, Jérôme, F-69500 Bron (FR); LAGNEAUX, Didier, F-74290 Bluffy (FR)
(74) Mandataire: Cabinet Laurent & Charras
(86) Numéro de dépôt international: PCT/FR2011/052170
(87) Numéro de publication internationale: WO 2012/120204

(56) Documents cités:
- DE-A1-102006 059 295
- US-A- 5 476 905
- US-A1- 2009 143 531

## Description

### DOMAINE DE L'INVENTION

L'invention concerne la préparation de polyoléfines modifiées par greffage de groupements hydrolysables et réticulables en atmosphère humide après transformation. Elle a également pour objet le procédé permettant d'obtenir lesdites polyoléfines.

### ETAT ANTERIEUR DE LA TECHNIQUE

La réticulation de polymères permet de changer leur structure en créant des liaisons covalentes entre les macromolécules constituant lesdits polymères notamment par l'intermédiaire d'un monomère réticulant. Cette méthode permet ainsi de modifier les propriétés desdits polymères, et peut en outre contribuer à l'amélioration de leur résistance thermomécanique. Elle peut être effectuée par irradiation mais elle est généralement effectuée par voie thermique ou par voie humide.

Les polyoléfines possèdent une faible polarité, ce qui peut être bénéfique pour certaines applications. Cependant dans certains cas, la nature non polaire des polyoléfines peut constituer un désavantage et limiter leur utilisation. En effet, en raison de leur inertie chimique, la fonctionnalisation et la réticulation des polyoléfines est difficile. Toutefois, il est possible de modifier les polyoléfines par greffage de composés spécifiques sur les chaînes du polymère afin d'améliorer leurs propriétés.

Les documents BE 652324 et US 3,414,551 décrivent un procédé de greffage de l'anhydride maléique sur du polypropylène alors que le document US 3,873,643 décrit le greffage d'acide carboxylique et d'anhydride d'oléfines cycliques insaturées sur du polyéthylène, en milieu fondu et en présence de peroxyde. Ces molécules augmentent la polarité des chaînes polymères mais elles ne permettent pas de les réticuler.

La réticulation des polyoléfines peut être réalisée par incorporation, suivie du greffage d'un monomère réticulant sur le polymère. Il s'agit de réticulation silane lorsque le monomère réticulant est un vinylsilane. La réticulation est donc précédée des deux étapes d'incorporation du silane et de son greffage.

Le document US 3,646,155 décrit la réticulation de polyoléfines, particulièrement le polyéthylène, par greffage sur la polyoléfine d'un silane hydrolysable insaturé à 140°C en présence d'un amorceur capable de générer des radicaux libres sur la polyoléfine. La réticulation silane est réalisée après exposition du produit de réaction à l'humidité, par réaction de condensation des fonctions silanols. Ce procédé a été largement utilisé commercialement pour réticuler le polyéthylène. Par exemple, les documents EP 809672 B1, EP 194213, EP 0276790, WO2007/014687, GB 2134530 et US 7,041,744 décrivent de tels procédés de greffage et de réticulation. Le silane hydrolysable insaturé est généralement le vinyltriméthoxysilane.

Le document US 6,864,324 divulgue l'utilisation de composés silane de formule générale R-Xₙ-C(R)=C(R)-C(R)=C(R)-Xₙ-Si(R¹)ₘ(OR²)₍₃₋ₘ₎ dans laquelle les groupements R représentent un atome d'hydrogène ou un groupement alkyl constitué de 1 à 3 atomes de carbone, ou un groupement aryl ou arylalkyl, et préférentiellement un groupement méthyl ou phényl. Le groupement R¹ représente un groupement alkyl linéaire ou branché constitué de 1 à 4 carbones. R² représente un groupement alkyl linéaire, branché ou cyclique constitué de 1 à 8 carbones, préférentiellement méthyl, éthyl, n-propyl ou isopropyl. Le groupement X représente un groupement -CH₂-, - (CH₂)₂-, -O(O)C(CH₂)₃- ou -C(O)O-(CH₂)₃-. Le nombre entier n est égal à 0 ou 1, alors que m est compris entre 0 et 3.

Bien que cette technologie de réticulation par voie silane soit très efficace en ce qui concerne les polyéthylènes, elle montre ses limites dans le cas des polypropylènes homopolymères ou des copolymères statistiques de polypropylène et d'éthylène. En effet, les radicaux tertiaires formés lors de la réaction de greffage sont très instables et conduisent à des réactions de coupures de chaînes appelées Beta-scission. En conséquence, la masse molaire du polymère diminue et entraine une diminution de la viscosité. En outre, cette dégradation conduit à un matériau aux performances inférieures à celles du polymère de départ. Au contraire, dans le cas de la réticulation du polyéthylène en présence d'initiateurs radicalaires, la formation de radicaux sur la chaine polymérique permet la formation de liaisons entre chaines polymériques et donc l'augmentation des masses molaires.

Le document US 2009/0143531 décrit un procédé de greffage d'un copolymère de propène et d'alpha-oléfine. Les exemples décrits concernent le greffage de copolymères comprenant 10 à 16 % en poids d'éthylène. Après greffage, les masses molaires des copolymères greffés selon ce procédé diminuent comme l'indique la baisse de viscosité (MFR) des copolymères greffés par rapport à celle des copolymères avant l'étape de greffage. Cette diminution de la viscosité est due à la dégradation des copolymères eu égard aux coupures par Beta-scission.

En effet, ces copolymères s'apparentent à des copolymères à blocs de type -(CH₂-CH(CH₃))ₘ-(CH₂-CH₂)ₙ-(CH₂-CH(CH₃))ₚ- et/ou -(CH₂-CH(CH₃))ₘ-₍CH₂-CH₂-CH₂-CH(CH₃))ₙ-(CH₂-CH(CH₃))ₚ- dans lesquels la proportion de monomère éthylène est telle que les copolymères éthylène/propène peuvent comprendre des blocs de motifs éthyléniques, -(CH₂-CH₂)ₙ- et/ou -(CH₂-CH₂-CH₂-CH(CH₃))ₙ, entre blocs de motifs du monomère propène majoritaire, -(CH₂-CH(CH₃))_{m/p}-. Ces copolymères blocs peuvent donc être dégradés par Beta-scission notamment lorsque la réticulation des blocs polyéthylène n'est pas favorisée.

Le document JP-A-06-172459 décrit un procédé de modification de polyoléfine au moyen de monomères vinyliques, en utilisant un peroxyde, et en présence d'un co-agent tel qu'un composé aromatique qui empêche les coupures de chaînes du polymère. Dans le cas particulier du polyéthylène, les monomères vinyliques en question sont les vinylsilanes. En revanche, dans le cas du polypropylène, le monomère vinylique préféré est l'anhydride maléique.

Dans le but d'empêcher la dégradation du polymère, le document EP 225186 décrit l'utilisation de styrène en combinaison avec un monomère n'appartenant pas à la famille des silanes. Par ailleurs, le document US 6,028,146 décrit le greffage d'un composé époxy insaturé sur le polypropylène en présence de styrène et de peroxyde.

Liu et al. (Polymer 41, 4537-4542 (2000), *« influences of grafting formulations and processing conditions on properties of silane grafted moisture crosslinked polypropylenes »*) décrivent le greffage du polypropylène par des silanes insaturés, le taux de réticulation atteint (taux de gel), ainsi que le niveau de dégradation du polypropylène. Les silanes insaturés utilisés sont le methacryloxypropyltrimethoxysilane et le vinyltriethoxysilane.

Huang et al. (J. Applied Polymer Science 78, 1233-1238 (2000), « influences of grafting formulations and extrusion conditions on properties of silane grafted polypropylenes ») décrivent un procédé de greffage similaire utilisant une extrudeuse bi-vis. Lu et Liu (China Plastics Industry, Vol. 27, N° 3, 27-29 (1999), « Hydrolytic crosslinking of silane graft onto polypropylene ») décrivent un procédé similaire.

Yang et al. (Polymer Engineering and Science, 1004-1008 (2007), « Mechanism of a one-step method for preparing silane grafting and crosslinking polypropylene ») décrivent un procédé de greffage de silane et de réticulation en une seule étape dans une extrudeuse bi-vis réactive. Bien que l'utilisation d'un co-agent tel que le styrène inhibe la dégradation du polymère, l'efficacité du greffage demeure insuffisante.

Afin de limiter la dégradation du polypropylène, le document PCT/FR2011/050100 du Demandeur décrit un procédé de préparation par extrusion de granulés de polypropylène post réticulable. Un peroxyde adapté et un vinylsilane sont incorporés au polypropylène en phase fondue dans une extrudeuse. Le profil de température adapté et un temps de séjour court permettent de réaliser l'imprégnation du polypropylène par le peroxyde et le silane, tout en limitant la dégradation du polypropylène. Le polypropylène ainsi imprégné est granulé en sortie d'extrudeuse. Le greffage du vinylsilane est ensuite réalisé à l'état solide par post-cuisson des granulés imprégnés. La post-cuisson à l'état solide permet d'éviter une dégradation supplémentaire du polypropylène. Après réticulation, le polypropylène présente une tenue mécanique jusqu'à 300°C.

En outre, le document WO2010/000478 A1 décrit un procédé de préparation, en batch ou en extrudeuse, de polyoléfines fonctionnalisées par des groupements silanes, qui permet de limiter la dégradation du polypropylène. L'efficacité du greffage résulte du choix d'un silane très réactif combiné avec un co-agent de greffage particulier. Le silane présente une formule générale R"-CH=CH-X-Y-SiRₐR'₍₃₋ₐ₎ ou R"-C≡C-X-Y-SiRₐR'₍₃₋ₐ₎, dans lesquelles X est un groupement ayant un effet attracteur d'électron vis-à-vis de la liaison -CH=CH- ou C=C- tels qu'un groupement carboxyl, carbonyl ou amide. Y représente un espaceur organique divalent comprenant au moins un atome de carbone séparant le groupement X de l'atome Si. R représente un groupement hydrolysable et R' un groupe hydrocarbonyl, R' possédant de 1 à 6 atomes de carbone. Le groupement R" représente notamment un atome d'hydrogène ou un groupe attracteur d'électron. R" peut en outre être un groupe de type -X-Y-SiRₐR'₍₃₋ₐ₎. A titre d'exemples, ces composés silane peuvent être le γ-acryloxypropyltrimethoxysilane, le γ-acryloxypropyltrimethoxysilane, le bis-(γ-trimethoxysilylpropyl) fumarate ou maleate, ou le bis-(γ-trimethoxysilylpropryl)-2-butynedioate.

Le co-agent de greffage inhibiteur de la dégradation du polypropylène est un composé contenant un cycle aromatique combiné à un groupement insaturé -C=C- oléfinique ou -C≡C-, un composé contenant un groupement insaturé -C=C- oléfinique ou -C≡C-combiné à un groupement insaturé -C=C- oléfinique ou -C≡C-, ou encore un acrylate multifonctionnel. A titre d'exemples, ces composés peuvent être le styrène, le sorbate d'éthyle et le tetracrylate de pentaerythritol.

Le document EP 1925628 A1 décrit l'utilisation d'une amine stériquement encombrée associée à un antioxydant phénolique pour l'amélioration d'un procédé de réticulation de polyoléfine greffée de vinyl silane.

Il est établi dans l'art antérieur que toutes les techniques de greffage du polypropylène par des silanes insaturés ne permettent pas d'éviter une dégradation du polypropylène, la dégradation des peroxydes entrainant des réactions de Beta-scission et donc une diminution de la masse molaire. Elles permettent de greffer plus ou moins efficacement le silane, en limitant plus ou moins efficacement la dégradation du polypropylène. Cependant, aucune de ces techniques ne permet de préserver les masses molaires du polypropylène lors du greffage

Le Demandeur a mis au point un procédé permettant d'obtenir, par greffage de groupements silanes hydrolysables, des polyoléfines et notamment du polypropylène homopolymère, post réticulables après transformation. Non seulement, le procédé de greffage mis au point permet d'empêcher la dégradation du polypropylène ou de la polyoléfine, mais il permet également d'augmenter les masses molaires. Les performances thermomécaniques du polypropylène réticulé ou de la polyoléfine réticulée obtenus sont ainsi très avantageusement améliorées par rapport à la polyoléfine de départ et aux polyoléfines greffées de l'art antérieur.

### EXPOSE DE L'INVENTION

L'objet principal de la présente invention concerne les polyoléfines postréticulables, ainsi que leur procédé de préparation par double greffage sur la polyoléfine d'un anhydride insaturé et d'un composé silane.
Par « postréticulable », on entend réticulable après transformation par mise en forme de la matière. La réticulation peut être réalisée par irradiation, par voie thermique, ou par voie humide. Dans le cadre de l'invention, il s'agit plus particulièrement de la réticulation silane par voie humide.

Le procédé mis au point par le Demandeur met en oeuvre un double greffage qui consiste 1) à greffer des fonctions anhydrides sur la polyoléfine, et 2) à faire réagir les fonctions anhydrides ainsi greffées avec un composé de type silane hydrolysable comprenant un groupement fonctionnel apte à réagir avec l'anhydride.

Plus précisément, la présente invention concerne, un procédé de préparation de granulés de polyoléfine post réticulable selon lequel :
- on greffe tout d'abord au moins une polyoléfine (constituant 1) avec au moins un anhydride insaturé (constituant 2) ; et
- on greffe ensuite la polyoléfine greffée anhydride ainsi obtenue avec au moins un silane hydrolysable (constituant 5), ledit silane hydrolysable comprenant au moins une fonction apte à réagir avec la fonction anhydride de la polyoléfine greffée anhydride.

Dans ce procédé, la polyoléfine (constituant 1) peut être choisie dans le groupe comprenant :
- les homopolymères d'oléfines de formule CH₂=CHQ, dans laquelle Q peut être un atome d'hydrogène, ou un groupement alkyl linéaire ou branché possédant 1 à 16 atomes de carbone ;
- les copolymères statistiques obtenus à partir d'au moins une oléfine de formule CH₂=CHQ, dans laquelle Q peut être un atome d'hydrogène, ou un groupement alkyl linéaire ou branché possédant 1 à 16 atomes de carbone ;
- les copolymères d'alpha oléfines obtenus à partir d'au moins deux monomères de formule CH₂=CHQ dans laquelle Q peut être un groupement alkyl linéaire ou branché possédant 2 à 16 atomes de carbone ;
- les copolymères obtenus à partir d'au moins 60% en poids, par rapport au poids dudit copolymère, d'au moins une alpha oléfine, de formule CH₂=CHQ dans laquelle Q est un groupement alkyl linéaire ou branché possédant 2 à 16 atomes de carbone, le ou les constituants minoritaires pouvant être des monomères de propylène et/ou d'éthylène.

Dans un mode de réalisation préféré, la polyoléfine (constituant 1) est choisie dans le groupe comprenant :
- les homopolymères d'oléfines de formule CH₂=CHQ, dans laquelle Q peut être un atome d'hydrogène, ou un groupement alkyl linéaire ou branché possédant 1 à 16 atomes de carbone ;
- les copolymères statistiques obtenus à partir d'au moins une oléfine de formule CH₂=CHQ, dans laquelle Q peut être un atome d'hydrogène, ou un groupement alkyl linéaire ou branché possédant 1 à 16 atomes de carbone ;

Par copolymère statistique, on entend tout copolymère comprenant au moins deux monomères A et B, de type -(A)ₘ-(B)-(A)ₙ-, c'est-à-dire un copolymère dans lequel le ou les monomères minoritaires B ne forment pas de blocs dans la chaine polymérique, la distribution séquentielle des monomères dans un copolymère statistique suivant les lois de probabilité. La structure de ces copolymères est semblable à celle de l'homopolymère A, avec une distribution statistique des motifs du monomère B. De manière générale, il est admis par l'homme du métier qu'un copolymère à blocs comprend au moins 5 % molaire de monomère B et qu'un copolymère statistique comprend au plus 5% de monomère B.

Selon un mode de réalisation particulier, la polyoléfine peut également être :
- un copolymère statistique obtenu à partir d'au moins 95 % en poids, par rapport au poids dudit copolymère, du monomère propène, et de moins de 5 % en poids d'au moins une oléfine de formule CH₂=CHQ dans laquelle Q est un atome d'hydrogène, ou un groupement alkyl linéaire ou branché possédant 2 à 16 atomes de carbone ; ou
- un copolymère statistique obtenu à partir d'au moins 95 % en poids, par rapport au poids dudit copolymère, d'au moins une alpha-oléfine de formule CH₂=CHQ dans laquelle Q est un groupement alkyl linéaire ou branché possédant 2 à 16 atomes de carbone.

La polyoléfine peut également être un copolymère de type :
- copolymère d'éthylène et de cyclo oléfine ;
- copolymère d'éthylène et d'ester de vinyle ;
- copolymère d'éthylène et d'acrylate ou de méthacrylate d'alkyle ;
- terpolymère tel que les terpolymères d'éthylène de propène et de diène, comprenant avantageusement au moins 95 % en poids, par rapport au poids dudit terpolymère, de monomère propène.

Selon un mode de réalisation particulier, la polyoléfine est un homopolymère d'alpha-oléfine ou un copolymère d'alpha-oléfines. Selon un autre mode de réalisation préféré, la polyoléfine est un polypropylène homopolymère.

La polyoléfine peut être par exemple un homopolymère de propène (polypropylène), de 1-butène, de 1-hexène, de 1-octène, de 4-methyl-pentène-1, ou de 2-méthylpropène (isobutylène).

En outre, les polyéthylènes concernés par l'invention peuvent être de type homopolymère tels que les polyéthylènes basse densité linéaire, les polyéthylènes basse densité radicalaire, et les polyéthylènes haute densité.

De manière générale, dans le cadre de la présente invention, la polyoléfine ne comprend pas d'insaturation. Il s'agit d'une polyoléfine saturée c'est-à-dire une polyoléfine ne comprenant pas d'insaturation dans sa chaîne polymérique.

Dans le cadre de l'invention, le greffage des polyoléfines peut également concerner un mélange de polyoléfines. L'invention concerne donc la préparation et le procédé de préparation d'une polyoléfine postréticulable mais aussi d'un mélange de polyoléfines postréticulables. Les polyoléfines choisies pour être modifiées suivant l'invention, peuvent être utilisées seules ou en mélange.

En outre, selon un mode de réalisation avantageux, le procédé de préparation de granulés de polyoléfine post réticulable selon l'invention comprend les étapes suivantes :
- on greffe tout d'abord au moins une polyoléfine (constituant 1) avec au moins un anhydride insaturé (constituant 2), en présence d'au moins un co-agent de greffage (constituant 3) et d'au moins un amorceur radicalaire (constituant 4) ; et
- on greffe ensuite la polyoléfine greffée anhydride ainsi obtenue avec au moins un silane hydrolysable (constituant 5), ledit silane hydrolysable comprenant au moins une fonction apte à réagir avec la fonction anhydride de la polyoléfine greffée anhydride.

Dans un mode de réalisation préféré, le composé silane hydrolysable peut être un silane hydrolysable fonctionnalisé amine. La réaction d'imidation entre le groupement anhydride et la fonction amine conduit à la formation d'un groupement imide, et permet ainsi le greffage d'un silane hydrolysable sur la polyoléfine.

De manière avantageuse, l'anhydride insaturé est un anhydride cyclique insaturé.

Comme déjà mentionné, non seulement ce procédé de double greffage permet d'empêcher la dégradation de la polyoléfine lorsque celle-ci est susceptible de se dégrader par réaction de Beta-scission, mais il permet également d'augmenter les masses molaires et d'obtenir après réticulation de la polyoléfine des performances thermomécaniques, très avantageusement améliorées par rapport à la polyoléfine de départ.

L'amorceur radicalaire, ou amorceur, permet de générer des radicaux libres sur la polyoléfine. Le co-agent de greffage permet, en réagissant très rapidement avec ces radicaux libres, d'inhiber la dégradation de la polyoléfine lorsque celle-ci est susceptible de se dégrader par réaction de Beta-scission. Après réaction avec la polyoléfine, le co-agent lié par liaison covalente à cette dernière est encore porteur d'un radical libre sur lequel vient réagir très rapidement l'anhydride insaturé. La fonction anhydride ainsi greffée réagit alors avec la fonction amine du composé de type silane fonctionnalisé amine par réaction d'imidation. Elle permet ainsi de lier par liaison covalente le groupement silane hydrolysable à la polyoléfine par l'intermédiaire d'un groupement imide.

Dans un mode de réalisation préféré, les deux greffages sont réalisés en continu. De manière avantageuse, les deux greffages sont réalisés dans une même extrudeuse.

Par « continu », l'homme du métier entend un procédé dans lequel le réacteur (extrudeuse) est alimenté en continu, de manière à ce que la quantité de matière alimentant le réacteur soit égale à la quantité de matière sortant du réacteur. Le débit d'entrée = débit de sortie ≠ 0. Au contraire, dans un procédé discontinu, le réacteur ou le malaxeur ou le mélangeur n'est pas alimenté en continu. Dans ce cas, le débit d'entrée = débit de sortie = 0.

Dans un cas particulier de l'invention, le procédé continu implique le greffage de la polyoléfine avec un anhydride insaturé dans une première extrudeuse. Cette extrudeuse est couplée à une deuxième extrudeuse dans laquelle le greffage du silane hydrolysable est réalisé. Le procédé continu comprend donc les deux greffages dans deux extrudeuses distinctes, la première extrudeuse alimentant la deuxième extrudeuse en polyoléfine greffée anhydride insaturé.

Dans le cas d'un procédé continu dans une même extrudeuse, les différents constituants peuvent être incorporés dans l'extrudeuse, individuellement ou en mélange, dans une ou plusieurs zones d'introduction de l'extrudeuse.

Le composé de type silane hydrolysable est avantageusement incorporé simultanément ou ultérieurement à l'anhydride insaturé. Cependant, dans une variante du procédé, le composé de type silane hydrolysable pourra être incorporé avant l'anhydride insaturé.

Selon un mode de réalisation préféré de l'invention, le procédé de préparation d'une polyoléfine post réticulable selon la présente invention est continu et se caractérise en ce que, dans une même extrudeuse, on introduit:
- une polyoléfine, et plus particulièrement du polypropylène (constituant 1) ;
- un anhydride insaturé, et plus particulièrement un anhydride cyclique insaturé (constituant 2) ;
- un co-agent de greffage de l'anhydride insaturé (constituant 3) ;
- au moins un amorceur radicalaire permettant d'initier le greffage radicalaire de l'anhydride insaturé sur la polyoléfine (constituant 4) ;
- au moins un composé de type silane hydrolysable (constituant 5), avantageusement fonctionnalisé amine.

De manière générale, le silane est introduit simultanément ou ultérieurement à l'anhydride insaturé. L'anhydride insaturé est introduit simultanément ou ultérieurement au co-agent de greffage. Le co-agent de greffage est introduit simultanément ou ultérieurement à l'amorceur. L'amorceur est introduit simultanément ou ultérieurement à la polyoléfine.

Dans le cadre de l'invention, les étapes d'incorporation de l'anhydride insaturé et du silane hydrolysable sont telles que l'anhydride est greffé sur la polyoléfine avant réaction avec le silane hydrolysable.

Dans le cadre de l'invention, le milieu réactionnel peut être rendu inerte en injectant, dans l'extrudeuse, un gaz inerte tel que par exemple de l'azote ou de l'argon. En effet, cette procédure peut s'avérer nécessaire, notamment dans le cas particulier et préféré où le silane hydrolysable est un silane hydrolysable fonctionnalisé amine, afin d'éviter la carbonatation de la fonction amine portée par le composé silane hydrolysable. En effet, la neutralisation de la fonction amine empêcherait la réaction entre le groupement anhydride et le silane hydrolysable.

L'amorceur capable de générer des radicaux libres sur la polyoléfine est choisi préférentiellement dans le groupe des peroxydes organiques, bien que d'autres amorceurs de radicaux libres tels les composés azo peuvent être utilisés. Préférentiellement, le radical formé par la décomposition de l'amorceur est un radical oxygène. Il est préférable d'utiliser un amorceur de type hydroperoxyde, peroxyde d'ester, peroxyde de cétal, peroxyde de dialkyle et de diacyle, peroxyde de cétone, peroxyde de diaryle, peroxyde d'aryle et d'alkyle, peroxyde de dicarbonate, peroxyde d'acide, peroxyde d'acyl-alkyl-sulfonyle et monoperoxyde de dicarbonate.

De manière préférentielle, les peroxydes sont choisis dans le groupe comprenant le peroxyde de dicumyle, le 2,5-dimethyl-2,5-di-(tert-butylperoxy)hexane, le peroxyde de di-tert-butyle, le 2,5-dimethyl-2,5-di-(tert-butylperoxy)hexyne-3, le 3,6,9-triethyl-3,6,9-trimethyl-1,4,7-triperoxonane, le peroxyde de benzoyle, le peroxyde de 2,4-dichlorobenzoyle, le peroxyacetate de tert-butyle, le peroxybenzoate de tert-butyle, le tert-amylperoxy-2ethylhexyl carbonate, le tert-butylperoxy-3,5,5-trimethylhexanoate, le 2,2-di(tert-butylperoxy)butane, le tert-butylperoxyisopropyl carbonate, le tert-butylperoxy-2-éthylhéxyl carbonate, le butyl 4,4-di(tert-butylperoxy)valerate, le peroxyde de di-tert-amyle, le peroxypivalate de tert-butyle, le tert-butyl-peroxy-2-ethyl hexanoate, le di(tert-butylperoxy)cyclohexane, le tert-butylperoxy-3,5,5-trimethylhexanoate, le di(tertbutylperoxyisopropyl) benzene, l'hydroperoxyde de cumène, le peroctoate de tert-butyle, le peroxyde de méthyl éthyl cétone, le peroxyde de tert-butyle et d'α-cumyle, le 2-5 dimethyl-2,5-di(peroxbenzoate)hexyne-3, le 1,3 ou 1,4-bis(tert-butylperoxyisopropyl)benzene, le peroxyde dilauryle, le peracetate de tert-butyle et le perbenzoate de tert-butyle.

Le co-agent de greffage est avantageusement choisi dans le groupe comprenant :
- les composés contenant un cycle aromatique combiné à un groupement insaturé -C=C- oléfinique ou -C≡C-,
- les composés contenant un groupement insaturé -C=C- oléfinique ou -C≡C-combiné à un groupement insaturé -C=C- oléfinique ou -C=C-,
- les acrylates multifonctionnels.

Le co-agent de greffage peut être utilisé seul ou en mélange.

Le co-agent de greffage est plus avantageusement choisi dans le groupe comprenant le styrène, le sorbate d'éthyle et le tetracrylate de pentaerythritol.

L'anhydride insaturé peut être linéaire, cependant, dans un mode de réalisation préféré, l'anhydride insaturé est cyclique, et est un composé de type anhydride organique cyclique contenant au moins une insaturation portée par le cycle ou portée par une chaine liée par liaison covalente au cycle. Le cycle comprend avantageusement la fonction anhydride. L'anhydride insaturé peut être choisi de façon non limitative dans le groupe comprenant l'anhydride maléique, l'anhydride itaconique, l'anhydride dodecenyl succinique, l'anhydride citraconique, l'anhydride 2,3-dimethylmaleique, l'anhydride 3,4,5,6-tetrahydrophthalique, et les mélanges de ces composés.

De manière avantageuse, l'anhydride cyclique insaturé est choisi dans le groupe comprenant l'anhydride maléique et l'anhydride itaconique.

Le composé silane hydrolysable est un composé possédant une fonction apte à réagir avec la fonction anhydride du composé anhydride insaturé, ledit anhydride insaturé étant préférentiellement préalablement greffé sur la polyoléfine.

De manière avantageuse, le silane hydrolysable est un silane hydrolysable fonctionnalisé amine, et plus avantageusement encore un composé silane de formule générale Si(R¹)ₘ(OR²)₍₄₋ₘ₎ pour laquelle m est égal à 1, 2 ou 3, préférentiellement égal à 1.

Par « fonctionnalisé amine », on entend que le silane hydrolysable comprend une fonction amine primaire NH₂.

Le groupement R¹ représente avantageusement un groupement choisi dans le groupe comprenant :
- tout groupement amino-alkyl linéaire ou branché comportant au moins une fonction amine primaire ;
- une chaîne polymérique de type polydiméthylsiloxane (PDMS) comportant au moins une fonction amine primaire ;
- une chaîne polymérique comprenant au moins un hétéroatome, et comportant en outre au moins une fonction amine primaire ;
- un groupement amino-alkyl cyclique comprenant éventuellement au moins un hétéroatome, et comportant au moins une fonction amine primaire.

De manière avantageuse, le groupement R¹ représente un groupement choisi dans le groupe comprenant :
- tout groupement amino-alkyl linéaire ou branché comportant au moins une fonction amine primaire ;
- une chaîne polymérique de type polydiméthylsiloxane (PDMS) comportant au moins une fonction amine primaire.

Le groupement R² représente avantageusement un groupement alkyl linéaire, branché ou cyclique, préférentiellement méthyl, éthyl, n-propyl ou isopropyl.

De manière avantageuse, le silane hydrolysable fonctionnalisé amine est un composé silane de formule générale Si(R¹)ₘ(OR²)₍₄₋ₘ₎, où R¹ est un groupement amino-alkyl linéaire ou branché comportant au moins une fonction amine primaire, R² est un groupement alkyl linéaire, branché ou cyclique, préférentiellement méthyl, éthyl, n-propyl ou isopropyl, et m est compris entre 1 et 3, m étant préférentiellement égal à 1.

De manière encore plus avantageuse, le composé silane hydrolysable fonctionnalisé amine est choisi de façon non limitative dans le groupe comprenant le gamma-aminopropyltriethoxysilane, le gamma-aminopropyltrimethoxysilane, le N-beta-(aminoethyl)- gamma-aminopropyltrimethoxysilane, le delta-aminoneohexyltrimethoxysilane, le N-beta-(aminoethyl)- gamma-aminopropylmethyldimethoxysilane, le delta-aminoneohexylmethyldimethoxysilane.

De manière générale, le silane hydrolysable peut être greffé seul ou mélangé à un ou plusieurs silanes hydrolysables. Il peut notamment être combiné avec un oligomère de polydiméthylsiloxane (PDMS) fonctionnalisé amine de formule générale H₂N-PDMS-X, dans lequel X peut représenter une fonction hydroxyle OH ou un groupement silane hydrolysable Si-(OR)ₘ avec m égal à 1, 2 ou 3, préférentiellement égal à 3.

Conformément au silane hydrolysable fonctionnalisé amine, cet oligomère de PDMS est greffé par liaison covalente sur la polyoléfine par l'intermédiaire d'un groupement imide grâce à sa fin de chaîne fonctionnalisée amine. Il participe ainsi au réseau réticulé grâce à sa fin de chaîne fonctionnalisée par une fonction hydroxyle OH ou un groupement silane hydrolysable. Ce type d'oligomère permet d'améliorer la tenue au feu de la polyoléfine réticulée.

La quantité d'amorceur incorporé pour réaliser le greffage de l'anhydride insaturé est généralement comprise entre 0.01 et 5 parts en poids pour 100 parts de polyoléfine. Lorsqu'il s'agit d'un peroxyde organique, la quantité d'amorceur incorporé pour réaliser le greffage de l'anhydride insaturé est préférentiellement comprise entre 0.01 et 2 parts en poids pour 100 parts de polyoléfine et plus préférentiellement comprise entre 0.01 et 0.5 parts en poids pour 100 parts de polyoléfine.

La quantité d'anhydride insaturé incorporé est généralement comprise entre 0.1 et 15 parts en poids pour 100 parts de polyoléfine. Préférentiellement, la quantité d'anhydride insaturé incorporé est comprise entre 0.2 et 10 parts en poids pour 100 parts de polyoléfine, plus préférentiellement comprise entre 0.4 et 5 parts pour 100 parts de polyoléfine, et encore plus préférentiellement comprise entre 0.5 et 2 parts en poids pour 100 parts de polyoléfine.

Lorsqu'il est présent, la quantité de co-agent de greffage incorporé est généralement comprise entre 0.1 et 15 parts en poids pour 100 parts de polyoléfine. Préférentiellement, la quantité de co-agent de greffage incorporé est comprise entre 0.2 et 10 parts en poids pour 100 parts de polyoléfine, plus préférentiellement comprise entre 0.3 et 5 parts pour 100 parts de polyoléfine, et encore plus préférentiellement comprise entre 0.4 et 2 parts en poids pour 100 parts de polyoléfine.

La quantité de silane hydrolysable incorporé est généralement comprise entre 0,2 parts et 20 parts en poids pour 100 parts de polyoléfine.

La quantité de silane hydrolysable incorporé est avantageusement ajustée par rapport à la quantité d'anhydride insaturé greffé de manière stoechiométrique (1 mol de molécule de composé silane hydrolysable pour 1 mol de molécule d'anhydride insaturé greffé), ou en excès d'anhydride insaturé greffé. Un excès d'anhydride insaturé greffé peut en outre être avantageux car il permet d'augmenter la polarité de la polyoléfine réticulée.

La quantité de silane hydrolysable à greffer nécessaire pour obtenir une polyoléfine suffisamment réticulée peut être réduite. La quantité de composé silane hydrolysable incorporé est préférentiellement comprise entre au moins 0,2 parts et 10 parts en poids pour 100 parts de polyoléfine, plus préférentiellement comprise entre 0,5 et 5 parts en poids 100 parts de polyoléfine, et encore plus préférentiellement comprise entre 0,6 et 3 parts en poids 100 parts de polyoléfine.

De manière générale, la réaction de greffage de l'anhydride insaturé sur la polyoléfine en présence de l'amorceur et du co-agent de greffage est réalisée à une température suffisamment élevée pour que la polyoléfine soit dans un état fondu et que l'amorceur se décompose rapidement. La température de réaction est généralement supérieure à 120°C, avantageusement supérieure à 140°C et encore plus avantageusement supérieure à 160°C. La température de réaction est généralement inférieure à 250°C et avantageusement inférieure à 220°C. Lorsque la polyoléfine est un polypropylène, la température de réaction de greffage est avantageusement comprise entre 170°C et 220°C.

Dans le cas particulier et préféré où le silane hydrolysable est un silane hydrolysable fonctionnalisé amine, la réaction d'imidation permettant le greffage du silane hydrolysable fonctionnalisé amine sur l'anhydride greffé est réalisée à une température suffisamment élevée pour que la polyoléfine soit dans un état fondu et que la réaction d'imidation soit rapide. La température de réaction entre la polyoléfine greffée anhydride et le silane hydrolysable, notamment un silane hydrolysable fonctionnalisé amine, est généralement supérieure à 120°C, avantageusement supérieure à 140°C et encore plus avantageusement supérieure à 160°C. La température de réaction est généralement inférieure à 250°C, et avantageusement inférieure à 220°C. Lorsque la polyoléfine est un polypropylène, la température de réaction de greffage est avantageusement comprise entre 170°C et 220°C.

En fin de procédé, après l'incorporation du composé silane hydrolysable et après réaction de ce composé avec les groupements anhydride greffés sur la polyoléfine, le procédé peut comprendre une étape supplémentaire permettant d'incorporer à la polyoléfine modifiée des stabilisants et additifs bien connus de l'homme de l'art. Les stabilisants peuvent être par exemple, des stabilisants thermiques (agents de protection thermique lors de la mise en oeuvre de la polyoléfine modifiée et après mise en oeuvre), des stabilisants UV (type HALS et absorbeur d'UV). Les additifs peuvent être par exemple des agents antistatique et antiscratch, des agents anti-fogging, des agents antimicrobien et antifongique, des agents clarifiant, des agents nucléant, des retardateurs de flamme, des absorbeurs d'oxygène, des catalyseurs d'hydrolyse des groupements silane. Les additifs peuvent être également des charges comme par exemple des fibres polymères, végétales et inorganiques, des charges inorganiques, végétales et/ou polymères, de tailles nanométriques ou micrométriques.

Dans une variante du procédé, ces stabilisants et additifs peuvent être incorporés au cours du procédé, dans l'une quelconque des zones de l'extrudeuse, simultanément ou non à l'addition de la polyoléfine, de l'anhydride insaturé, du co-agent de greffage, de l'amorceur radicalaire, ou du silane hydrolysable.

Comme déjà précisé, le mode préférentiel de modification de la polyoléfine suivant l'invention concerne un procédé de double greffage par extrusion réactive en continu dans une même extrudeuse.

Dans une variante de ce mode de réalisation préféré, la polyoléfine peut être greffée par l'anhydride insaturé lors d'une première étape. Cette première étape peut être réalisée de façon continue en extrudeuse ou de façon discontinue en réacteur, mélangeur ou malaxeur. Il s'agit alors du greffage d'un silane hydrolysable sur une polyoléfine préalablement greffée anhydride insaturé.

Par ailleurs, la modification de la polyoléfine suivant l'invention peut être réalisée en réacteur, mélangeur ou malaxeur. Cette modification de la polyoléfine, réalisée en réacteur, mélangeur ou malaxeur peut comporter l'ensemble des étapes du double greffage consistant à faire réagir une polyoléfine non greffée, un amorceur radicalaire, un co-agent de greffage, un anhydride insaturé et un silane hydrolysable. Cette modification, réalisée en réacteur, mélangeur ou malaxeur, peut également comporter une seule étape de greffage simple d'un silane hydrolysable sur une polyoléfine déjà greffée par des groupements anhydrides.

En sortie d'extrudeuse ou en sortie de réacteur, les joncs obtenus de polyoléfine greffée anhydride et silane sont refroidis et granulés.

Comme déjà mentionné les polyoléfines modifiées suivant l'invention présentent avant réticulation des masses molaires augmentées, et après réticulation des performances thermomécaniques exceptionnelles, très avantageusement améliorées par rapport à la polyoléfine de départ, du fait de l'augmentation des masses molaires résultant du double greffage.

Les polyoléfines modifiées selon la présente invention présentent avantageusement par rapport à la polyoléfine de départ :
Avant réticulation :
   - une viscosité supérieure.
Après réticulation :
   - une contrainte au seuil supérieure,
   - un allongement au seuil supérieur,
   - une contrainte à la rupture supérieure,
   - un module de flexion supérieure,
   - une résistance aux chocs équivalente ou supérieure,
   - une tenue thermique avec conservation du module élastique jusqu'à 300°C,
   - une température de déflection sous charge supérieure, et
   - une résistance au fluage en température supérieure.

De manière générale, lorsque la polyoléfine modifiée selon la présente invention est un polypropylène homopolymère, elle peut avantageusement présenter après réticulation des performances exceptionnelles nettement supérieures aux polypropylènes les plus rigides, avec notamment par rapport au polypropylène non modifié :
- une contrainte au seuil supérieure de 10 MPa, voire 15 MPa,
- un allongement au seuil supérieur de 10%,
- un module de flexion supérieur de 700 MPa, voire 1200 MPa,
- une résistance aux chocs supérieure,
- une tenue thermique avec conservation du module élastique jusqu'à 300°C,
- une température de déflection sous charge supérieure de 20°C voire 25°C, et
- une résistance au fluage en température supérieure.

La présente invention concerne également les granulés de polyoléfine post réticulable susceptibles d'être obtenus selon le procédé décrit ci-avant mais aussi tout article moulé susceptible d'être obtenu à partir de ces granulés, après injection desdits granulés et réticulation en atmosphère humide de la polyoléfine greffée anhydride insaturé et silane hydrolysable.

Les granulés de polyoléfine post réticulable selon la présente invention peuvent être mise en oeuvre selon les techniques connues de l'homme du métier, conformément à la transformation de polymère thermoplastique. On citera par exemple l'extrusion, l'extrusion gonflage, l'extrusion soufflage, le moulage par injection et le moulage par compression.

Les polyoléfines sont généralement des matières dites de commodité. Après réticulation, les polyoléfines modifiées suivant l'invention deviennent des matières techniques ultra légères. Elles présentent notamment des performances thermomécaniques comparables à celles de polymères de spécialité et pourront être utilisées dans des applications où une température élevée d'utilisation en continu est requise.

Par exemple, un polypropylène modifié suivant l'invention pourra après réticulation être utilisé en continu à des températures de l'ordre de 140 à 150°C et remplacer un polyamide 6 dans les applications sous capot moteur dans l'automobile.

Un matériau composite obtenu à partir de polyoléfine modifiée suivant l'invention chargée de fibres longues et plus particulièrement obtenu à partir de polypropylène modifié suivant l'invention chargé de fibres longues, peut après réticulation remplacer certaines pièces de structures métalliques utilisées en continu à des températures de l'ordre de 140 à 150°C, par exemple dans les applications sous capot moteur dans l'automobile.

Dans un autre exemple d'application, les polyoléfines modifiées suivant l'invention peuvent être utilisées dans la fabrication de tuyaux pour la circulation de fluide chaud, en remplacement des métaux. La réticulation, après mise en forme, des polyoléfines modifiées selon l'invention confère aux tuyaux une résistance à la température et à la pression permettant la circulation de fluide jusqu'à 140-150°C notamment dans le cas du polypropylène modifié selon la présente invention.

Le domaine d'utilisation auquel se rapporte particulièrement la présente invention concerne l'industrie automobile mais aussi toute industrie dont les pièces nécessitent de présenter une tenue à des températures de l'ordre de 100 à 150 °C notamment.

### EXEMPLES DE REALISATION ET DESCRIPTION DETAILLEE DE L'INVENTION

L'invention et les avantages qui en découlent ressortiront mieux des figures et exemples suivants illustrant, de manière non limitative, la modification d'une polyoléfine par double greffage.

Par double greffage, on entend le greffage d'une polyoléfine avec un anhydride insaturé et avec un silane hydrolysable.

Les figures 1 et 2 représentent une extrudeuse en coupe et schématisent le procédé de double greffage d'une polyoléfine selon deux modes de réalisation préférés.
La figure 3 représente les spectres infra-rouge obtenus pour du (a) polypropylène, (b) du polypropylène greffé avec de l'anhydride maléique, (c) du polypropylène greffé anhydride maléique et silane hydrolysable fonctionnalisé amine (gamma-aminopropyltrimethoxysilane).

Les figures 4 et 5 illustrent le module de conservation (MPA) en fonction de la température pour des polypropylènes (hPP1, hPP2 et cPP) non modifiés, et des polypropylènes greffés anhydride maléique et silane hydrolysable fonctionnalisé amine après réticulation (PPX1, PPX2 et PPX3).

Sont décrits ci-après les 16 modes de réalisations particuliers (MRP) regroupés dans le tableau 1, et concernant l'ordre d'introduction préféré des composants 1 à 5 dans le cas d'un procédé continu en extrudeuse. Ce procédé met en oeuvre le greffage d'une polyoléfine avec un anhydride insaturé en présente d'un co-agent de greffage et d'un amorceur, mais aussi le greffage de la polyoléfine greffée anhydride insaturé avec un silane hydrolysable.

De manière générale, l'extrudeuse peut comprendre de 1 à 5 zones d'incorporation et de 1 à 5 zones de cisaillement.

Dans un premier mode de réalisation particulier (MRP 1), la polyoléfine, l'anhydride insaturé, le co-agent de greffage, l'amorceur radicalaire et le silane hydrolysable sont incorporés simultanément dans une première zone (zone 1) de l'extrudeuse.

Dans un deuxième mode de réalisation particulier (MRP 2), la polyoléfine, l'anhydride insaturé, le co-agent de greffage et l'amorceur radicalaire sont incorporés simultanément dans une première zone (zone 1). Le silane hydrolysable est incorporé ultérieurement dans une deuxième zone (zone 2) de l'extrudeuse.

Dans un mode de réalisation particulier, la polyoléfine, le co-agent de greffage et l'amorceur radicalaire sont incorporés simultanément dans une première zone (zone 1). L'anhydride insaturé et le silane hydrolysable sont incorporés ensuite, simultanément dans une deuxième zone (zone 2) de l'extrudeuse (MRP 3) ou séparément (MRP 4). Lorsqu'ils sont incorporés séparément l'anhydride insaturé est incorporé dans la deuxième zone (zone 2) et le silane hydrolysable est incorporé ultérieurement dans une troisième zone (zone 3) de l'extrudeuse.

Dans un mode de réalisation particulier, la polyoléfine et l'amorceur radicalaire sont incorporés simultanément dans une première zone (zone 1). L'anhydride insaturé, le co-agent de greffage et le silane hydrolysable sont incorporés ensuite, simultanément (MRP 5) dans une deuxième zone (zone 2) de l'extrudeuse ou séparément (MRP 6-8). Dans ce cas particulier, et lorsque l'anhydride insaturé, le co-agent de greffage et le silane hydrolysable sont incorporés séparément, le co-agent de greffage peut être incorporé dans la deuxième zone (zone 2) seul (MRP 7-8) ou avec l'anhydride insaturé (MRP 6). Lorsqu'il est incorporé avec l'anhydride insaturé, le silane hydrolysable est incorporé ultérieurement dans une troisième zone (zone 3). Lorsqu'il est incorporé seul, l'anhydride insaturé peut être incorporé ultérieurement avec le silane hydrolysable dans une troisième zone (zone 3) (MRP 7) ou seul (MRP 8). Lorsque l'anhydride insaturé est incorporé seul, dans la troisième zone, le silane hydrolysable est incorporé ultérieurement dans une quatrième zone (zone 4) (MRP 8).

Dans un mode de réalisation particulier, la polyoléfine est incorporée seule dans une première zone (zone 1). L'anhydride insaturé, le co-agent de greffage, l'amorceur radicalaire et le silane hydrolysable peuvent être incorporés simultanément et ultérieurement dans une deuxième zone (zone 2) de l'extrudeuse (MRP 9).

Lorsqu'ils ne sont pas incorporés simultanément dans la deuxième zone, le silane hydrolysable peut être incorporé ultérieurement dans une troisième zone de l'extrudeuse (zone 3), avec l'anhydride insaturé (MRP 11-13) ou seul (MRP 10).

L'anhydride insaturé peut également être incorporé seul dans la troisième zone de l'extrudeuse, le silane hydrolysable est alors incorporé dans un quatrième zone (zone 4) (MRP 12).

Dans un mode de réalisation particulier, la polyoléfine est incorporée seule dans une première zone (zone 1) et l'amorceur radicalaire est incorporé seul dans la deuxième zone (zone 2) (MRP 13-16). L'anhydride insaturé, le co-agent de greffage et le silane hydrolysable peuvent être alors incorporés ultérieurement, simultanément (MRP 13) dans la troisième zone (zone 3) ou séparément (MRP 14-16). Lorsqu'ils sont incorporés séparément, le silane hydrolysable peut être incorporé dans une quatrième zone (zone 4), seul (MRP 14) ou avec l'anhydride insaturé (MRP 15). L'anhydride insaturé peut également être incorporé seul dans cette quatrième zone (zone 4) et le silane hydrolysable est alors incorporé ultérieurement dans une cinquième zone (zone 5) (MRP 16).

Dans un mode de réalisation préférentiel, la polyoléfine est incorporée seule dans une première zone (zone 1). L'amorceur radicalaire, le co-agent de greffage et l'anhydride insaturé sont incorporés ultérieurement dans une deuxième zone de l'extrudeuse (zone 2). Le silane hydrolysable est incorporé encore ultérieurement dans une troisième zone (zone 3) de l'extrudeuse (MRP 10).

Dans un mode de réalisation encore plus préférentiel, la polyoléfine est incorporée avec l'amorceur radicalaire, le co-agent de greffage et l'anhydride insaturé dans une première zone (zone 1). Le silane hydrolysable est incorporé ultérieurement dans une deuxième zone (zone 2) de l'extrudeuse (MRP 2).

**Tableau 1 : Zones et ordre d'incorporation des constituants.**

| Mode de réalisation particulier | Zone 1 | Zone 2 | Zone 3 | Zone 4 | Zone 5 |
|---|---|---|---|---|---|
| MRP 1 | -polyoléfine | | | | |
| | -amorceur | | | | |
| | -co-agent | | | | |
| | -anhydride | | | | |
| | -silane | | | | |
| MRP 2 | -polyoléfine | -silane | | | |
| | -amorceur | | | | |
| | -co-agent | | | | |
| | -anhydride | | | | |
| MRP 3 | -polyoléfine | -anhydride | | | |
| | -amorceur | -silane | | | |
| | -co-agent | | | | |
| MRP 4 | -polyoléfine | -anhydride | -silane | | |
| | -amorceur | | | | |
| | -co-agent | | | | |
| MRP 5 | -polyoléfine | -co-agent | | | |
| | -amorceur | -anhydride | | | |
| | | -silane | | | |
| MRP 6 | -polyoléfine | -co-agent | -silane | | |
| | -amorceur | -anhydride | | | |
| MRP 7 | -polyoléfine | -co-agent | -anhydride | | |
| | -amorceur | | -silane | | |
| MRP 8 | -polyoléfine | -co-agent | -anhydride | -silane | |
| | -amorceur | | | | |
| MRP 9 | -polyoléfine | -amorceur | | | |
| | | -co-agent | | | |
| | | -anhydride | | | |
| | | -silane | | | |
| MRP 10 | -polyoléfine | -amorceur | -silane | | |
| | | -co-agent | | | |
| | | -anhydride | | | |
| MRP 11 | -polyoléfine | -amorceur | -anhydride | | |
| | | -co-agent | -silane | | |
| MRP 12 | -polyoléfine | -amorceur | -anhydride | -silane | |
| | | -co-agent | | | |
| MRP 13 | -polyoléfine | -amorceur | -co-agent | | |
| | | | -anhydride | | |
| | | | -silane | | |
| MRP 14 | -polyoléfine | -amorceur | -co-agent | -silane | |
| | | | -anhydride | | |
| MRP 15 | -polyoléfine | -amorceur | -co-agent | -anhydride | |
| | | | | -silane | |
| MRP 16 | -polyoléfine | -amorceur | -co-agent | -anhydride | -silane |

| | | | | | |
|---|---|---|---|---|---|
| co-agent = co-agent de greffage ; anhydride = anhydride insaturé ; silane = silane hydrolysable | | | | | |

### Exemples de réalisation :

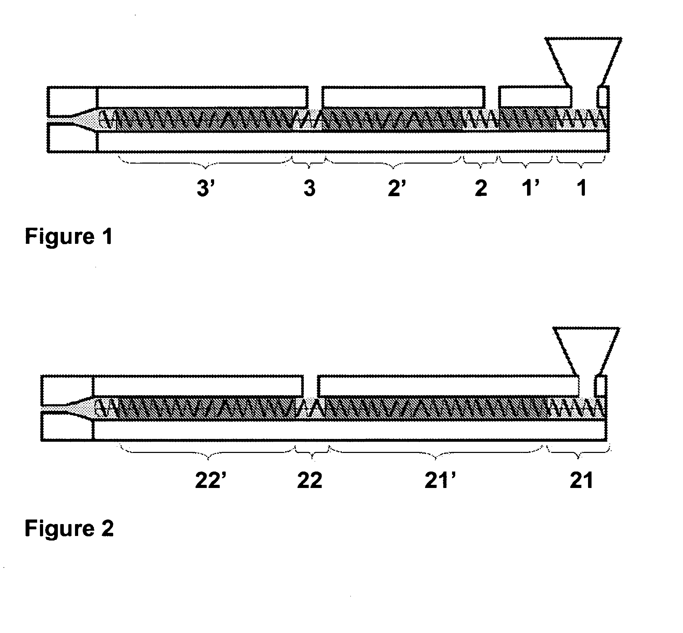

Dans le premier exemple de réalisation illustré par la figure 1, la polyoléfine est incorporée seule dans une première zone (zone 1). L'amorceur radicalaire, le co-agent de greffage et l'anhydride insaturé sont incorporés ultérieurement dans une deuxième zone de l'extrudeuse (zone 2). Le silane hydrolysable est incorporé ultérieurement dans une troisième zone (zone 3) de l'extrudeuse. Cet exemple de réalisation correspond au mode de réalisation particulier MRP10 du tableau 1.

Dans ce premier exemple de réalisation particulier, les profils de vis et de température sont définis comme ci-après :
- zones de transport et d'incorporation des constituants (1), (2) et (3) dans lesquelles la température est comprise entre 130 et 170°C ;
- zones de cisaillement (1'), (2') et (3') dans lesquelles la température est comprise entre 170 et 220°C.

Dans le deuxième exemple de réalisation illustré par la figure 2, la polyoléfine est incorporée avec l'amorceur radicalaire, le co-agent de greffage et l'anhydride insaturé dans une première zone (zone 21). Le silane hydrolysable est incorporé ultérieurement dans une deuxième zone (zone 22) de l'extrudeuse. Cet exemple de réalisation correspond au mode de réalisation particulier MRP2 du tableau 1.

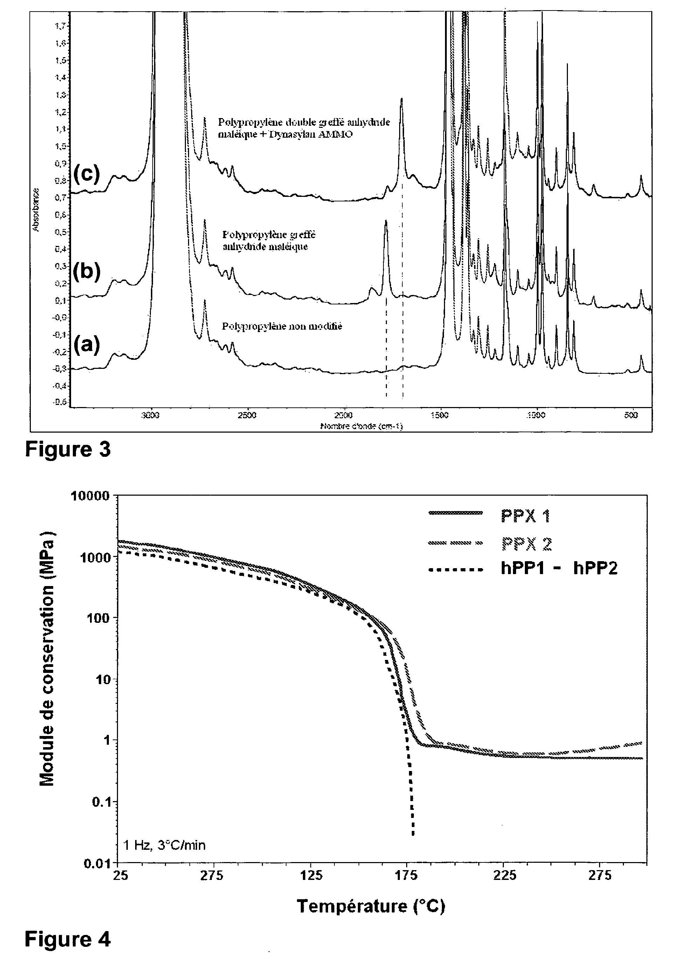

La figure 3 correspond aux spectres Infra-Rouge obtenus en réflexion. Ces courbes permettent d'illustrer les deux étapes de greffage avec notamment la présentation d'un spectre d'un polypropylène avant modification (spectre (a)), la présentation d'un spectre du polypropylène modifié avant l'incorporation du silane fonctionnalisé amine (spectre (b)) et la présentation d'un spectre du polypropylène modifié ultérieurement à l'incorporation du silane fonctionnalisé amine (spectre (c)). Le spectre (b) montre clairement le greffage de l'anhydride insaturé (anhydride maléique) sur le polypropylène avec notamment la présence du pic d'absorption à 1781 cm⁻¹. Le spectre (c) montre clairement le greffage du silane fonctionnalisé amine (gamma-aminopropyltrimethoxysilane) sur le polypropylène préalablement greffé anhydride, avec notamment la disparition du pic d'absorption à 1781 cm⁻¹ et l'apparition du pic d'absorption à 1702 cm⁻¹ caractéristique d'une fonction imide résultant de la réaction entre un groupement anhydride et un fonction amine.

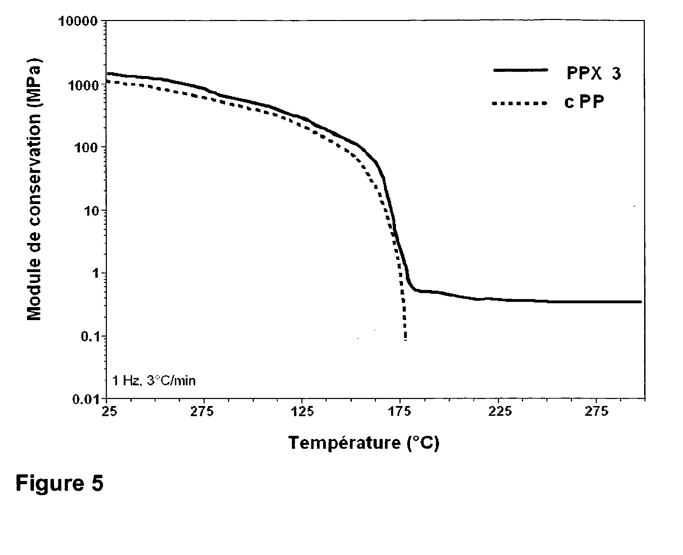

Les figures 4 et 5 correspondent aux courbes DMTA (Dynamic Mechanical Thermal Analysis) obtenues en traction à une fréquence de 1 Hz pour un gradient de température de 3 °C/min à partir de polypropylènes homo et copolymères réticulés. Ces courbes permettent d'illustrer l'amélioration de la tenue thermique après réticulation de polypropylènes homopolymères (PPX1, PPX2) et copolymère (PPX3) modifiés selon l'invention par rapport aux polypropylènes homo et copolymères non modifiés (hPP1, hPP2 et cPP), avec notamment la conservation d'un comportement élastique des polypropylènes réticulés jusqu'à 300°C alors que les polypropylènes (homo et co) polymères non modifiés et non réticulés s'effondrent à 170°C après la fusion de sa phase cristalline.

Tous les exemples de réalisation concernant les homo et copolymères modifiés selon l'invention (PPX1, PPX2, PPX3) de la présente invention ont été effectués dans une extrudeuse bi-vis co-rotative de marque TSA présentant un diamètre (D) de 26 et de rapport L/D égal à 50.

Deux échantillons de polypropylènes homopolymères modifiés et un échantillon de polypropylène copolymère modifié dont les compositions et les modes de réalisation sont résumés dans le tableau 2 ci-après ont été préparés. Les quantités indiquées pour chaque composé sont exprimées en nombre de parts de composé pour 100 parts d'homo ou copolymère.

L'amorceur Luperox 101 correspond au 2,5-dimethyl-2,5-di-(tert-butylperoxy)hexane. Le silane hydrolysable fonctionnalisé amine Dynasylan®AMMO correspond au gamma-Aminopropyltrimethoxysilane.

Les propriétés rhéologiques (MVR) avant réticulation, les propriétés mécaniques après réticulation (Contrainte au seuil d'élasticité σₛₑᵤᵢₗ, Allongement au seuil d'élasticité εₛₑᵤᵢₗ, Allongement à la rupture εᵣᵤₚₜᵤᵣₑ, Module de flexion E_{f}, Résilience, Température de déflexion sous charge HdT, Résistance au fluage Hotset test) des échantillons de polypropylènes homopolymères et (co)polymère modifiés sont données dans le tableau 2.

**Tableau 2 : Compositions et mode de réalisation des échantillons de polypropylènes homopolymères modifiés PPX 1 et PPX2 et de polypropylène copolymère modifié PPX3.**

| Exemple | | PPX1 | PPX2 | PPX3 |
|---|---|---|---|---|
| Polypropylène | | Moplen HP456J ⁽ⁱ⁾ (hPP1) | Moplen HP500N ⁽ⁱⁱ⁾ (hPP2) | Moplen RP316M⁽ⁱⁱⁱ⁾ (cPP) |
| Type de Polypropylène | | Homopolymère | Homopolymère | Copolymère |
| Amorçeur radicalaire | Composé | Luperox 101 | Luperox 101 | Luperox 101 |
| | Quantité | 0.05 | 0.1 | 0.1 |
| Co-agent de greffage | Composé | styrène | styrène | styrène |
| | Quantité | 0.4 | 0.8 | 0.8 |
| Anhydride cyclique insaturé | Composé | Anhydride maléique | Anhydride maléique | Anhydride maléique |
| | Quantité | 0.6 | 1.3 | 1.3 |
| Silane hydrolysable fonctionnalisé amine | Composé | Dynasylan®AMMO | Dynasylan®AMMO | Dynasylan®AMMO |
| | Quantité | 0.7 | 2 | 2 |
| Mode de réalisation | | 1 | 2 | 1 |

| | | | | |
|---|---|---|---|---|
| ⁽ⁱ⁾ PP homopolymères manufacturé par Lyondell-Basell ⁽ⁱ⁾ PP homopolymère manufacturé par Lyondell-Basell ⁽ⁱⁱⁱ⁾ PP copolymère de propène et d'éthylène manufacturé par Lyondell-Basell | | | | |

Les propriétés rhéologiques (MVR) avant réticulation, les propriétés mécaniques après réticulation (contrainte au seuil d'élasticité σₛₑᵤᵢₗ ; allongement au seuil d'élasticité εₛₑᵤᵢₗ ; allongement à la rupture εᵣᵤₚₜᵤᵣₑ ; module de flexion E_{f}; résilience ; température de déflexion sous charge HdT ; résistance au fluage Hotset test) des échantillons de polypropylènes homopolymères modifiés selon la présente invention sont données dans le tableau 3.

**Tableau 3 : Propriétés rhéologiques avant réticulation et propriétés mécaniques après réticulation des échantillons de polypropylène homopolymères modifiés PPX 1 et PPX2 et de polypropylène copolymère modifié PPX3.**

| (co)polymère | Moplen HP456J (hPP1) | PPX1 | Moplen H500N (hPP2) | PPX2 | Moplen RP316N (cPP) | PPX3 |
|---|---|---|---|---|---|---|
| NWR_{(230°C/2,16kg)} (cm³/10 min) | 4,6 | 0,7* | 16 | 10* | 8 | 6* |
| E_{f} (MPa) | 1500 | 2850 | 1550 | 3410 | 1100 | 1330 |
| σₛₑᵤᵢₗ (Mpa) | 34 | 49.0 | 35 | 46,2 | 28.8 | 31.3 |
| εₛₑᵤᵢₗ (%) | 10 | 23 | 10 | 24 | 20 | 21 |
| εᵣᵤₚₜᵤᵣₑ (%) | >50 | 39 | >50 | 41 | 300 | 210 |
| Résilience (kJ/m2) | 190 | >190 | 110 | >190 | >200 | >200 |
| HdT B _{0,45 Mpa} (°C) | 97 | 118 | 95 | 120 | 85 | 97 |
| Hot set test _{(140°C / 24h / 2,16 kg),} Allongement (%) | 18 | 8 | 22 | 4 | 32 | 8 |

Les caractéristiques des trois polypropylènes modifiés (PPX1, PPX2, PPX3) selon l'invention montrent de façon évidente l'augmentation des masses molaires des polypropylènes homo et copolymères avec une diminution notable du MVR avant réticulation, et l'augmentation de toutes les performances thermomécaniques. En outre, nous notons que :
- pour les polypropylènes homopolymères (PPX1 et PPX2), une augmentation de la contrainte au seuil de 30 à 45% (supérieure à 10 MPa), une augmentation de l'allongement au seuil de 100 à 150% (supérieur à 10%), une augmentation du module de flexion de 80 à 120% (supérieur à 1200 MPa), une résistance aux chocs équivalente voire supérieure, une augmentation de la température de déflection sous charge de 20 à 26% (supérieure à 20-25°C), une résistance au fluage nettement améliorée et une tenue thermique supérieure avec conservation du module élastique jusqu'à 300°C,
- pour le polypropylène copolymère (PPX3), une augmentation de la contrainte au seuil de 10%, une augmentation du module de flexion de 20%, une résistance aux chocs équivalente voire supérieure, une augmentation de la température de déflection sous charge supérieure de 10°C, une résistance au fluage nettement améliorée et une tenue thermique supérieure avec conservation du module élastique jusqu'à 300°C.

Ainsi, grâce au procédé selon la présente invention, il est possible d'augmenter la viscosité de la polyoléfine et plus avantageusement du polypropylène homo et copolymères après double greffage.

### Description des tests de caractérisation :

### Test de traction

On détermine les caractéristiques mécaniques en traction des différents échantillons selon la norme NF T51-034 (Détermination des propriétés en traction) en utilisant un banc d'essai Lloyd Instrument LR5K, une vitesse de traction : 50 mm/min et des éprouvettes normalisées de type H2.

### Test de flexion

La mesure du module de flexion est réalisée selon la norme ISO 178.

### Indice de fluidité à l'état fondu (MVR)

On détermine l'indice de fluidité en volume à 230°C/2.16kg des différents échantillons en utilisant un gradeur Kayeness 4001 Dynasco.

### Test Charpy

L'essai de flexion par choc sur éprouvette Charpy a pour but de mesurer la résistance d'un matériau à la rupture brutale. Cet essai est destiné à mesurer l'énergie nécessaire pour rompre en une seule fois une éprouvette. On utilise un mouton-pendule muni à son extrémité d'un couteau qui permet de développer une énergie donnée au moment du choc.
L'énergie absorbée est obtenue en comparant la différence d'énergie potentielle entre le départ du pendule et la fin de l'essai.
Dans les présents exemples, les mesures de résistance au choc Charpy sur des éprouvettes non entaillées sont effectuées selon la norme EN ISO 179-1.

### Test HDT

La température de déflexion thermique (HDT) est une mesure relative de la capacité de la matière à être performante pendant une courte période à des températures élevées tout en supportant une charge. Le test mesure l'effet de la température sur la consistance : un échantillon d'essai standard subit une tension superficielle déterminée et la température est élevée à vitesse constante.
Les normes décrivant ce test sont les normes ASTM D648, ISO 75 et ASTM D648-98c.

Dans les présents exemples, les mesures de HDT sont effectuées avec une charge de 0,45 MPa (HDT/B), selon la norme ISO 75.

### Test de fluage en température (hotset test)

Le test de fluage en température consiste à appliquer une charge calibrée sur une éprouvette normalisée pendant un temps donné et à une température donné. La mesure de l'allongement de l'éprouvette en fin de test permet d'évaluer la résistance au fluage d'une matière. Moins l'allongement est important, plus la résistance au fluage de la matière est importante.

Dans les présents exemples, les tests de fluage en température sont effectués avec une charge de 2.16 kg à 140°C et pendant 24 heures, selon la norme NF T51-103.

## Revendications

1. Procédé de préparation de granulés de polyoléfine post réticulable selon lequel :
- on greffe tout d'abord au moins une polyoléfine (constituant 1) avec au moins un anhydride insaturé (constituant 2) ; et
- on greffe ensuite la polyoléfine greffée anhydride ainsi obtenue avec au moins un silane hydrolysable (constituant 5), ledit silane hydrolysable comprenant au moins une fonction apte à réagir avec la fonction anhydride de la polyoléfine greffée anhydride ;
la polyoléfine (constituant 1) étant choisie dans le groupe comprenant :
- les homopolymères obtenus à partir d'une oléfine de formule CH₂=CHQ, dans laquelle Q peut être un atome d'hydrogène, ou un groupement alkyl linéaire ou branché possédant 1 à 16 atomes de carbone ;
- les copolymères statistiques obtenus à partir d'au moins une oléfine de formule CH₂=CHQ, dans laquelle Q peut être un atome d'hydrogène, ou un groupement alkyl linéaire ou branché possédant 1 à 16 atomes de carbone ;
- les copolymères d'alpha oléfines obtenus à partir d'au moins deux monomères de formule CH₂=CHQ dans laquelle Q peut être un groupement alkyl linéaire ou branché possédant 2 à 16 atomes de carbone.
- les copolymères obtenus à partir d'au moins 60% en poids, par rapport au poids dudit copolymère, d'au moins une alpha oléfine, de formule CH₂=CHQ dans laquelle Q est un groupement alkyl linéaire ou branché possédant 2 à 16 atomes de carbone, le ou les constituants minoritaires pouvant être des monomères de propylène et/ou d'éthylène.

2. Procédé selon la revendication 1, ***caractérisé* en ce que** la polyoléfine est un polypropylène homopolymère.

3. Procédé selon la revendication 1 ou 2, ***caractérisé* en ce que** l'anhydride insaturé est un anhydride cyclique insaturé, avantageusement un anhydride maléique ou itaconique.

4. Procédé selon l'une quelconque des revendications 1 à 3, ***caractérisé* en ce que** l'anhydride insaturé est un anhydride maléique ou itaconique.

5. Procédé selon l'une quelconque des revendications 1 à 4, ***caractérisé* en ce que** les deux greffages sont réalisés en continu.

6. Procédé selon la revendication 5, ***caractérisé* en ce que** les deux greffages sont réalisés dans une même extrudeuse.

7. Procédé selon l'une quelconque des revendications 1 à 6, ***caractérisé* en ce que** le greffage de l'anhydride insaturé est réalisé en présence d'au moins un co-agent de greffage (constituant 3) et d'au moins un amorceur radicalaire (constituant 4).

8. Procédé selon l'une quelconque des revendications 1 à 7, ***caractérisé* en ce que** le silane hydrolysable est un silane hydrolysable fonctionnalisé amine, avantageusement un composé silane de formule générale Si(R¹)ₘ(OR²)₍₄₋ₘ₎, dans laquelle :
R¹ est un groupement choisi dans le groupe comprenant tout groupement amino-alkyl linéaire ou branché comportant au moins une fonction amine primaire ; une chaîne polymérique de type polydiméthylsiloxane (PDMS) comportant au moins une fonction amine primaire ; une chaîne polymérique comprenant au moins un hétéroatome, et comportant en outre au moins une fonction amine primaire ; un groupement amino-alkyl cyclique comprenant éventuellement au moins un hétéroatome, et comportant au moins une fonction amine primaire,
R² est un groupement alkyl linéaire, branché ou cyclique, préférentiellement méthyl, éthyl, n-propyl ou isopropyl, et
m est compris entre 1 et 3.

9. Procédé selon l'une quelconque des revendications 1 à 8, ***caractérisé* en ce que** la quantité d'anhydride insaturé incorporé est comprise entre 0.1 et 15 parts en poids pour 100 parts de polyoléfine.

10. Procédé selon l'une quelconque des revendications 1 à 9, ***caractérisé* en ce que** la quantité de silane hydrolysable incorporé est comprise entre 0,2 parts et 20 parts en poids pour 100 parts de polyoléfine.

11. Granulés de polyoléfine post réticulable susceptibles d'être obtenus selon l'une quelconque des revendications 1 à 10.

12. Article moulé susceptible d'être obtenu à partir des granulés selon la revendication 11 après injection desdits granulés et réticulation en atmosphère humide de la polyoléfine greffée anhydride insaturé et silane hydrolysable.

## Patentansprüche

1. Herstellungsverfahren für Granulat aus nachvernetzbarem Polyolefin, gemäß dem:
- zunächst mindestens ein Polyolefin (Bestandteil 1) mit mindestens einem ungesättigten Anhydrid (Bestandteil 2) aufgepfropft wird; und
- dann das so erhaltene anhydridaufgepfropfte Polyolefin mit mindestens einem hydrolysierbaren Silan (Bestandteil 5) aufgepfropft wird, wobei das hydrolysierbare Silan mindestens eine Gruppe umfasst, die in der Lage ist, mit der Anhydridgruppe des anhydridaufgepfropften Polyolefins zu reagieren;
wobei das Polyolefin (Bestandteil 1) aus der Gruppe ausgewählt ist, die umfasst:
- Homopolymere, die aus einem Olefin mit der Formel CH₂=CHQ gewonnen sind, worin Q ein Wasserstoffatom oder eine lineare oder verzweigte Alkylgruppe sein kann, die 1 bis 16 Kohlenstoffatome besitzt;
- statistische Copolymere, die aus mindestens einem Olefin mit der Formel CH₂=CHQ gewonnen sind, worin Q ein Wasserstoffatom oder eine lineare oder verzweigte Alkylgruppe sein kann, die 1 bis 16 Kohlenstoffatome besitzt;
- Alpha-Olefin-Copolymere, die aus mindestens zwei Monomeren mit der Formel CH₂=CHQ gewonnen sind, worin Q eine lineare oder verzweigte Alkylgruppe sein kann, die 2 bis 16 Kohlenstoffatome besitzt;
- Copolymere, die aus mindestens 60 Gew.-%, im Verhältnis zum Gewicht des Copolymers, mindestens eines Alpha-Olefins mit der Formel CH₂=CHQ gewonnen sind, worin Q eine lineare oder verzweigte Alkylgruppierung sein kann, die 2 bis 16 Kohlenstoffatome besitzt, wobei der oder die minderheitliche/n Bestandteil/e Propylen- und/oder Ethylenmonomere sein können.

2. Verfahren nach Anspruch 1, **dadurch gekennzeichnet, dass** das Polyolefin ein Polypropylenhomopolymer ist.

3. Verfahren nach Anspruch 1 oder 2, **dadurch gekennzeichnet, dass** das ungesättigte Anhydrid ein zyklisches ungesättigtes Anhydrid, vorteilhafter Weise ein Malein- oder Itaconanhydrid ist.

4. Verfahren nach einem der Ansprüche 1 bis 3, **dadurch gekennzeichnet, dass** das ungesättigte Anhydrid ein Malein- oder Itaconanhydrid ist.

5. Verfahren nach einem der Ansprüche 1 bis 4, **dadurch gekennzeichnet, dass** die zwei Aufpropfungen kontinuierlich erfolgen.

6. Verfahren nach Anspruch 5, **dadurch gekennzeichnet, dass** die zwei Aufpropfungen in ein und demselben Extruder erfolgen.

7. Verfahren nach einem der Ansprüche 1 bis 6, **dadurch gekennzeichnet, dass** die Aufpropfung des ungesättigten Anhydrids im Beisein mindestens eines Propf-Coagens (Bestandteil 3) und mindestens eines Radikalinitiators (Bestandteil 4) erfolgt.

8. Verfahren nach einem der Ansprüche 1 bis 7, **dadurch gekennzeichnet, dass** das hydrolysierbare Silan ein aminfunktionalisiertes hydrolysierbares Silan, vorteilhafter Weise eine Silanverbindung mit der allgemeinen Formel Si(R¹)ₘ(OR²)₍₄₋ₘ₎ ist, worin
R¹ eine Gruppierung ist, die aus der Gruppe ausgewählt ist, die jede lineare oder verzweigte Aminoalkylgruppierung umfasst, die mindestens eine primäre Amingruppe umfasst; eine Polymerkette des Typs Polydimethylsiloxan (PDMS), die mindestens eine primäre Amingruppe umfasst; eine Polymerkette, die mindestens ein Heteroatom enthält und außerdem mindestens eine primäre Amingruppe umfasst; eine zyklische Aminoalkylgruppierung, die gegebenenfalls mindestens ein Heteroatom enthält und mindestens eine primäre Amingruppe umfasst,
R² eine lineare, verzweigte oder zyklische Alkylgruppierung, vorzugsweise Methyl, Ethyl, n-Propyl oder Isopropyl ist, und
m zwischen 1 und 3 beträgt.

9. Verfahren nach einem der Ansprüche 1 bis 8, **dadurch gekennzeichnet, dass** die aufgenommene Menge ungesättigten Anhydrids zwischen 0,1 und 15 Gewichtsteile pro 100 Teile Polyolefin beträgt.

10. Verfahren nach einem der Ansprüche 1 bis 9, **dadurch gekennzeichnet, dass** die aufgenommene Menge hydrolysierbaren Silans zwischen 0,2 und 20 Gewichtsteile pro 100 Teile Polyolefin beträgt.

11. Granulat aus nachvernetzbarem Polyolefin, das nach einem der Ansprüche 1 bis 10 gewonnen werden kann.

12. Formgegossener Gegenstand, der aus dem Granulat nach Anspruch 11 nach Einspritzung des Granulats und Vernetzung in feuchter Atmosphäre des ungesättigten anhydridaufgepfropften Polyolefins und hydrolysierbaren Silans erhalten werden kann.

## Claims

1. Process for preparing granules of post-cross-linkable polyolefin according to which:
- at least one polyolefin (constituent 1) is first of all grafted with at least one unsaturated anhydride (constituent 2); and
- the resulting anhydride-grafted polyolefin is then grafted with at least one hydrolysable silane (constituent 5), said hydrolysable silane comprising at least one function capable of reacting with the anhydride function of the anhydride-grafted polyolefin;
the polyolefin (constituent 1) being selected from the group comprising:
- homopolymers derived from an olefin of formula CH₂ = CHQ, wherein Q may be a hydrogen atom, or a linear or branched alkyl group that has 1 to 16 carbon atoms;
- statistical copolymers obtained from at least one olefin of formula CH₂ = CHQ, wherein Q may be a hydrogen atom, or a linear or branched alkyl group that has 1 to 16 carbon atoms;
- alpha olefin copolymers obtained from at least two monomers of the formula CH₂ = CHQ, wherein Q may be a linear or branched alkyl group that has 2 to 16 carbon atoms.
- copolymers obtained from at least 60% by weight, with respect to the weight of said copolymer, of at least one alpha olefin of formula CH₂ = CHQ, wherein Q is a linear or branched alkyl group that has 2 to 16 carbon atoms, and wherein the minor constituents may be propylene and/or ethylene monomers.

2. Process according to claim 1, **characterised in that** the polyolefin is a polypropylene homopolymer.

3. Process according to claim 1 or 2, **characterised in that** the unsaturated anhydride is an unsaturated cyclic anhydride, preferably a maleic or itaconic anhydride.

4. Process according to any one of the claims 1 to 3, **characterised in that** the unsaturated anhydride is maleic anhydride or itaconic anhydride.

5. Process according to any one of the claims 1 to 4, **characterised in that** the two grafts are carried out continuously.

6. Process according to claim 5, **characterised in that** the two grafts are executed in a single extruder.

7. Process according to any one of the claims 1 to 6, **characterised in that** the unsaturated anhydride grafting is executed in the presence of at least one grafting co-agent (constituent 3) and at least one radical initiator (constituent 4).

8. Process according to any one of the claims 1 to 7, **characterised in that** the hydrolysable silane is a functionalised amine of hydrolysable silane, preferably a silane compound of the general formula Si(R¹)ₘ(OR²)₍₄₋ₘ₎, in which:
R¹ is a group selected from the group comprising any linear or branched amino-alkyl group having at least one primary amine function; a polymeric chain of polydimethylsiloxane (PDMS) having at least one primary amine function; a polymeric chain comprising at least one heteroatom, and further comprising at least one primary amine function; a cyclic amino-alkyl group possibly comprising at least one heteroatom, and which has at least one primary amine function,
R² is a linear alkyl group, branched or cyclic, preferably methyl, ethyl, n-propyl or isopropyl, and
m is between 1 and 3.

9. Process according to any one of the claims 1 to 8, **characterised in that** the quantity of incorporated unsaturated anhydride is between 0.1 and 15 parts by weight per 100 parts of polyolefin.

10. Process according to any one of the claims 1 to 9, **characterised in that** the quantity of incorporated hydrolysable silane is between 0.2 parts and 20 parts by weight per 100 parts of polyolefin.

11. Granules of post cross-linkable polyolefin that can be obtained according to any one of the claims 1 to 10.

12. A moulded article that can be obtained from the granules according to claim 11, after injecting the said granules and cross-linking the unsaturated anhydride-grafted polyolefin and hydrolysable silane in a moist atmosphere.
